# EUROPEAN PATENT SPECIFICATION

(11) **EP 1 303 201 B1**
(45) Date of publication and mention of the grant of the patent: **10.08.2005**
(21) Application number: 01938451.0
(22) Date of filing: 15.06.2001
(51) Int. Cl.: A41G 1/00

(54) **A METHOD OF SHAPING HEAT-SHRINKABLE MATERIALS**
VERFAHREN ZUR GESTALTUNG VON HEISSSCHRUMPFFÄHIGEN MATERIALIEN
PROCEDE DE FORMAGE DE MATERIAUX THERMORETRACTABLES

(30) Priority: 16.06.2000 GB 0014852
(43) Date of publication of application: 23.04.2003
(73) Proprietor: CI4B Limited, London WC1A 2DA (GB)
(72) Inventor: FINK, Bernhard, A-1070 Vienna (AT)
(74) Representative: Babeluk, Michael, Dipl.-Ing.
(86) International application number: PCT/GB2001/002643
(87) International publication number: WO 2001/095753

(56) References cited:
- WO-A-96/13434
- US-A- 4 957 787

## Description

THE PRESENT INVENTION relates to a method of shaping heat-shrinkable materials and, more particularly, a method of shaping heat-shrinkable materials by the application of heat. The present invention also relates to a kit for use in the method.

It has been known for many years that plastic, materials may be shaped by heating the material to a temperature at which it may be easily deformed and bending, or otherwise shaping, the plastic material into the desired configuration. It has also been known that pre-stretched plastic materials have a particular response to heating. When pre-stretched plastic materials are heated above their deformation temperature, then the material is known to shrink in size.

WO-A-96 134 34 discloses a prior art shaping method by mixing a substance heatable by microwave radiation.

The problem with these prior art methods of shaping plastic materials is that they either require human or mechanical intervention during heating in order to obtain the desired configuration or, in the case of heating a pre-stretched plastic material, only allow shaping by way of shrinkage of all of the plastic material.

The present invention seeks to address these problems.

According to a first aspect of the present invention there is provided a method according to claim 1.

Conveniently, the substance comprises a susceptor.

Preferably, the substance comprises a liquid.

Advantageously, the liquid comprises water.

Conveniently, the blank further comprises means, located adjacent a portion of the plastic material, for adsorbing or absorbing the liquid.

Preferably, the means for adsorbing and absorbing the liquid comprises a hydrophylic coating on the surface of the plastic material.

Advantageously, the means for absorbing the liquid comprises an absorbent material.

Conveniently, the step of applying the liquid comprises immersing the blank in the liquid so that the liquid is adsorbed or absorbed by the means for adsorbing or absorbing the liquid.

Preferably, the step of applying microwave radiation to the liquid comprises placing the blank in a microwave oven and activating the oven.

Advantageously, the oven is activated for between one and sixty seconds, preferably for between one and fifteen seconds.

Conveniently, the heat shrinkable material comprises a pre-stretched plastics material.

Advantageously, the pre-stretched plastics material comprises a two way oriented material.

Preferably, the pre-stretched plastics material comprises oriented polyethylene.

According to a second aspect of the present invention not claimed, there is provided a decorative item comprising: a deformable sheet of a heat-shrinkable material; and a substance heatable by microwave radiation located adjacent at least a portion of the sheet, such that, in response to microwave radiation, the substance is heated thus heating and deforming the adjacent portion or portions of the sheet to shape the decorative item.

Conveniently, the decorative item comprises a plurality of sheets of the heat-shrinkable material, the sheets being connected together, the substance being located adjacent to at least a portion of at least one sheet.

Preferably, the sheets are arranged in a stack, the substance being interleaved between the sheets.

Advantageously, the substance is a susceptor.

According to a third aspect of the present invention there is provided a decorative item comprising: a deformable sheet of a heat-shrinkable material; and means for adsorbing or absorbing a liquid adjacent to at least a portion of the sheet, the liquid being heatable by microwave radiation such that, in response to microwave radiation, the liquid is heated thus heating and deforming the adjacent portion or portions of the sheet to shape the decorative item.

Conveniently, the decorative item comprises a plurality of sheets of the heat-shrinkable material, the deformable sheets being connected together, the means for adsorbing or absorbing the liquid being located so that the liquid is adsorbable or absorbable adjacent to at least a portion of at least one sheet.

Preferably, the deformable sheets and the means for adsorbing or absorbing the liquid are arranged in a stack, the means for adsorbing or absorbing the liquid being interleaved between the sheets.

Advantagously, the means for adsorbing or absorbing a liquid comprises one or more absorbent sheets, each absorbent sheet being interleaved between two deformable sheets, the deformable sheet and the absorbent disc being mounted concentrically.

Conveniently, the absorbent sheets are made from paper.

Preferably, the or each absorbent sheet comprises a disc.

Advantageously, said means for adsorbing or absorbing the liquid comprises a hydrophilic coating on the surface of at least a portion of at least one of the plastic sheets.

Conveniently, the decorative item further comprises a hydrophobic coating applied to at least a portion of at least one of the plastic sheets.

Preferably, at least one of the plastic sheets has a substantially annular, hydrophobic coating and a central, substantially circular, hydrophilic coating.

Advantageously, the hydrophobic coating is wax.

Conveniently, the liquid comprises water.

Preferably, the heat shrinkable material comprises a pre-stretched plastics material.

Advantageously, the pre-stretched plastics material comprises oriented polyethylene.

Preferably the pre-stretched plastics material comprises a two way oriented material.

Conveniently, each plastic sheet is orientated such that the direction of stretching is not parallel to the direction of stretching of its adjacent plastic sheet or sheets.

Preferably, each plastic sheet is orientated such that the direction of stretching is substantially perpendicular to its adjacent plastic sheets or sheet.

Advantageously, the deformable sheets are attached concentrically to each other by a fastener.

Conveniently, the fastener is made from a plastic material.

Preferably, the or each deformable sheet comprises a disc.

Advantageously, at least one of the discs is circular.

According to a fourth aspect of the present invention not claimed, there is provided a kit for making a shaped object comprising a deformable blank of a heat shrinkable material; and a substance locatable adjacent at least a portion of the blank, the substance being heatable by microwave radiation such that, in response to microwave radiation, the substance is heated thus heating and deforming any adjacent portion or portions of the sheet to shape the object.

Conveniently, the shaped object is a decorative item as described above and the blank is the deformable sheet.

According to a fifth aspect of the present invention there is provided a kit according to claim 8.

Preferably, the shaped object is a decorative item as described above and the blank is the deformable sheet.

According to a sixth aspect of the present invention not claimed, there is provided a method as described above wherein the blank comprises a decorative item as described above.

In order that the invention may be more readily understood and so that further features thereof may be appreciated, embodiments thereof will now be described, by way of example, with reference to the accompanying drawings in which:
Figure 1 is an exploded, perspective view of a decorative plastics item to be shaped according to a method embodying the present invention; and
Figures 2 to 4 are plan views of components for decorative plastics items according to other embodiments of the invention.

A decorative item comprises a plurality of discs made from a pre-stretched plastics material, a paper disc being sandwiched between each part of neighbouring plastics discs. All the discs are arranged concentrically and held together by a single rivet passing through the common centre of the discs.

Each of the plastics discs is prestretched in a predetermined direction and is therefore predisposed to deform in a prescribed manner upon the application of heat which raises the temperature of the plastics material above the material's deformation temperature of 70°C.

Suitable plastics materials are commonly available and can easily be selected by those skilled in the art. It is preferred that a shrinkable polymer is used, preferably having the following properties: high stiffness; high temperature resistance; at least 50% shrinkable upon heating; high microwave transparency; no emission of harmful substances when overheated; and being approved for food contact. In one embodiment an OPET-film (oriented polyethylene) is used.

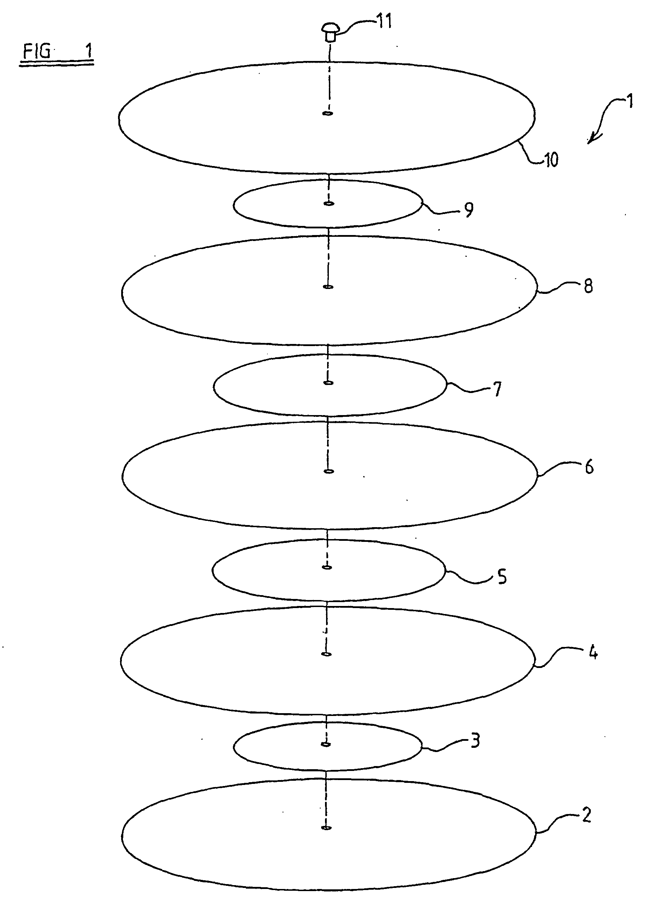

Referring now to Figure 1, in which a particular embodiment of the invention is shown, a decorative item 1 comprises a first disc 2 made from a pre-stretched plastics material. The disc 2 is approximately 80mm in diameter and may be up to 1.2mm in thickness. Above the first disc 2, a paper disc 3 is provided, concentric to the first disc 2. The paper disc has a diameter of approximately 50mm.

Above the paper disc 3 is provided a second plastic disc 4, concentric with the first plastic disc 2 and the first paper disc 3. The second plastic disc 4 is substantially identical to the first plastic disc 2 except that the second plastic disc 4 is orientated such that its direction of stretching is perpendicular to the direction of stretching of the first plastic disc 2.

Above the second plastic disc 4 is provided a second paper disc 5, concentric with the other 3 discs. The second paper disc 5 is substantially identical to the first paper disc 3 except that it has a diameter of approximately 60mm.

Above the second paper disc 5 is provided a third plastic disc 6, again concentric with the other discs, and being substantially identical to the first and second plastic discs 2, 4. The third plastic disc 6 is orientated such that its direction of stretching is substantially parallel to the direction of stretching of the first plastic disc 2 and substantially perpendicular to the direction of stretching of the second plastic disc 4.

Above the third plastic disc 6 are provided a further set of discs substantially mirroring the first and second plastic and paper discs. Thus, directly above the third plastic disc 6 is a third paper disc 7, corresponding to the second paper disc 5, above which is a fourth plastic disc 8 corresponding to the second plastic disc 4, above which is a fourth paper disc 9, corresponding to the first paper disc 3, above which is a fifth plastic disc 10, corresponding to the first plastic disc 2. The discs are stacked and attached, concentrically, by a rivet 11 made from a plastic material. Thus, the plastic discs 2, 4, 6, 8 and 10 form a stack with the paper discs 3, 5, 7 and 9 interleaved between each pair of plastic discs. It is to be appreciated that, throughout the stack, the plastic discs are orientated such that adjacent plastic discs have directions of stretching substantially perpendicular to one another.

In use, when it is desired to shape the decorative item 1, the stack of discs is dipped in water. Alternatively, the decorative item 1 may be immersed in water in other ways, for example, by spraying on water. The water penetrates between the plastic discs 2, 4, 6, 8 and 10 and soaks the paper discs 3, 5, 7 and 9. While the paper discs 3, 5, 7 and 9 are still wet, the decorative item is subjected to microwave radiation (i.e. electromagnetic radiation having a frequency between 1 and 100GHz), for example by using a domestic microwave oven. The microwave radiation is absorbed by the water and heats the water. By applying microwave radiation to the decorative item 1 for approximately 10 seconds, the water soaked into the paper discs 3, 5, 7 and 9 is heated and in turn heats the adjacent plastic discs 2, 4, 6, 8 and 10. The heating raises the temperature of the plastic discs above the deformation temperature of the plastic material and the portions of the plastic discs adjacent one or more of the paper discs shrink and shape the plastic disc.

Since the first and fourth paper discs 3, 9 are smaller than the second and third paper discs 5, 7, different portions of each adjacent plastic disc are heated. The portions of each plastic disc 2, 4, 6, 8 and 10 that are heated shrink slightly and bend. Because the direction of pre-stretching of the plastic discs 2, 4, 6, 8 and 10 in the decoration. 1 alternates, the bending direction of adjacent plastic discs also alternates. The combination of differential heating and alternating directions of pre-stretched plastic causes the decoration to shape and curl into an attractive three dimensional configuration.

After heating and shaping of the decorative item 1, the decorative item is allowed to cool, the shaping of the plastic discs being retained despite the cooling.

It is to be appreciated that, in other embodiments of the present invention, different means may be used for applying water to the plastic discs. For example, in one embodiment of the invention, paper discs are not provided in the decorative item 1. Instead, absorbent discs made from another material may be used.

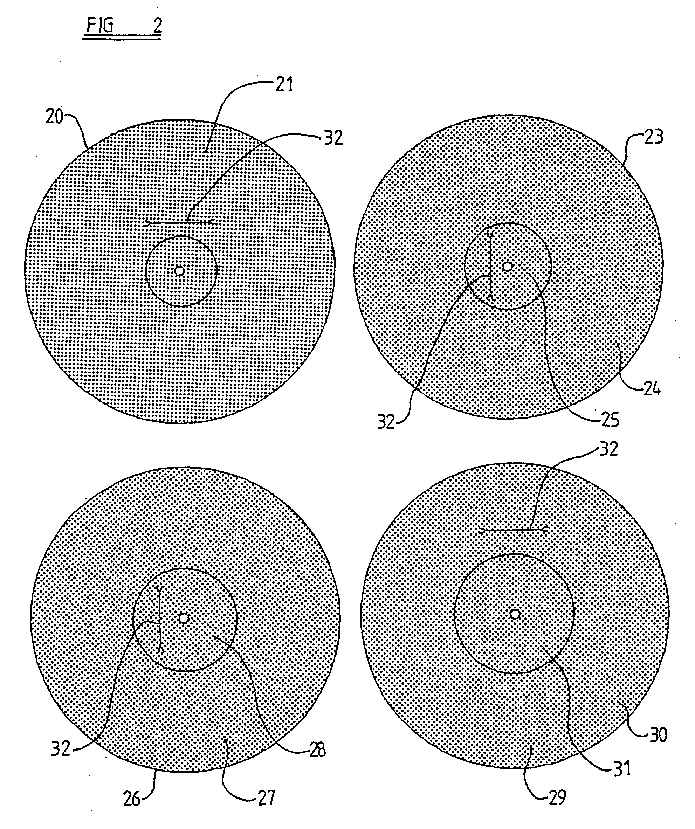

Alternatively, absorbent materials may be dispensed with and the components of a decorative item embodying this aspect of the invention are shown in Figure 2. A first plastic disc 20 has an annular hydrophobic coating 21 (for example of wax) and a central circular hydrophilic coating 22. Similarly, a second plastic disc 23 is provided with a smaller, annular, hydrophobic coating 24 and a larger, central, circular hydrophilic coating 25. A third plastic disc 26 is provided with an even smaller annular hydrophobic coating 27 and an even larger central, circular hydrophilic coating 28. A fourth plastic disc 29 is provided with a yet smaller annular hydrophobic coating 30 and a yet larger, central, circular hydrophobic coating 31. The four plastic discs 20, 23, 26, 29 are stacked concentrically and attached centrally by a plastic rivet. As in previous embodiments of the invention, the directions of prestretching of adjacent plastic discs (shown by the arrow 32) are perpendicular.

In this embodiment of the invention, the decorative item is dipped in water and water is allowed to soak between the plastic discs 20, 23, 26, 29. In regions where there is a hydrophilic coating 22, 25, 28, 31, the water is adsorbed adjacent the surface of the respective plastic disc. In regions of the plastic discs having a hydrophobic coating, 21, 24, 27, 30, the water runs off and the surface of the plastic disc is substantially dry. Subsequently, the decorative item is subjected to microwave radiation, as has been described in relation to the first embodiment of the invention. Portions of the plastic discs adjacent which there is water are heated and bend whereas the other portions of the plastic discs remain dry and do not bend.

In another version of this embodiment of the invention, a further plastic disc may be provided at either end of the existing stack of discs, which further disc is provided with an annular hydrophobic coating, but whose central circular region is uncoated. Decorations having such an additional plastic disc may have improved shaping characteristics.

In another version of the second embodiment of the present invention, the hydrophobic, annular coatings on the plastic discs 20, 23, 26, 29, may be divided into four quadrants by uncoated strips between each quadrant. Division of the hydrophobic coating into quadrants can provide different shaping characteristics of the decorative item.

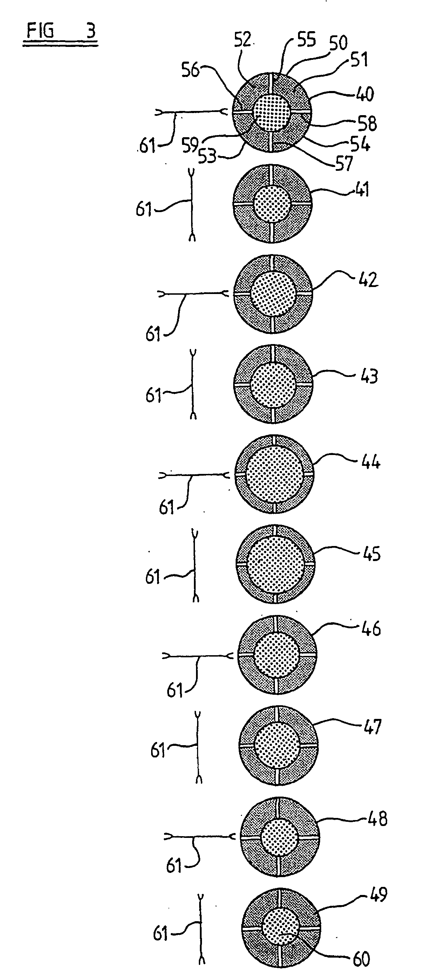

As an example, Figure 3 shows the components of a decorative item embodying these last two versions of the invention. The plastic discs 40 to 49 are provided and are stacked concentrically. The top disc 40 has an outer annular hydrophobic coating 50, divided into four quadrants 51-54 by four radially extending uncoated strips 55-58. Within the hydrophobic coating 50, is provided a central circular hydrophilic coating 59.

The first eight plastic discs 41 to 48 stacked beneath the top disc 40 are substantially identical to the top disc 40 except that the size of each respective outer hydrophobic coating (and therefore the corresponding central hydrophilic coating therewithin) varies. The plastic disc 41 directly beneath the top disc 40 has a hydrophobic coating annulus the same size as that for the top disc 40 but the second and third discs down 42, 43, have smaller hydrophobic coating annuli and the fourth and fifth discs down 44, 45 have even smaller hydrophilic coating annuli. Similarly, the diameter of the central, circular, hydrophilic coating is progressively larger in subsequent plastic discs.

The size of the hydrophobic coating annuli for the sixth and seventh discs down 46, 47 corresponds with that for the second and third discs down 42, 43. The size of the hydrophobic coating annulus for the seventh disc down 48, corresponds with that for the first disc down 41. The bottom disc 49 also has an annular hydrophobic coating of this size and has corresponding uncoated strips defining quadrants therein. However, no hydrophilic coating is provided in the bottom disc, its central circular area 60 being uncoated.

When the ten discs 40-49 are stacked, they are arranged such that their respective directions of pre-stretching (shown by the arrows 61) alternate. Thus the direction of pre-stretching of adjacent plastic discs is substantially perpendicular.

It is to be appreciated that many other variations of these embodiments of the present invention may be realised. For example, the invention is not limited to the above described numbers of plastic discs. Instead, more or fewer plastic discs may be provided in a stack, having appropriate coatings or interleaved paper discs as necessary. For example, in certain embodiments of the invention only a single plastic disc is provided. Furthermore, the size of the absorbent discs or the hydrophobic and hydrophilic coatings may be altered in order to create a variety of shapes and characteristics upon application of microwave radiation.

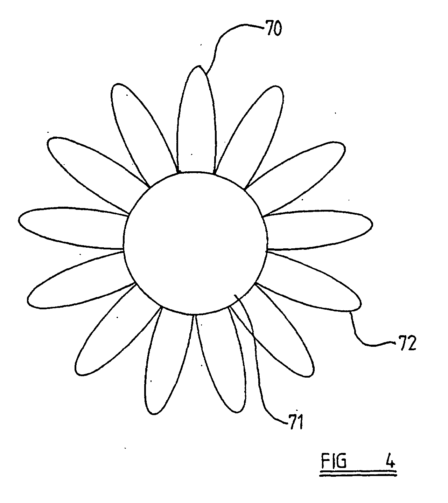

It is also to be appreciated that the shape of the plastic discs may be varied. A sheet of any shape made from a pre-stretched plastic material could be used. For example, the discs may be in the shape of a polygon or may be "flower" shapes having radially extending petals in order to create different effects. An example of a plastic disc having such a shape is shown in Figure 4. A plastic disc 70 comprises a central circular region 71 and a plurality of petals 72 which extend radially, outwardly about the circular region 71. Furthermore, the diameter of plastic discs in a stack may be varied in order to create differing effects.

In another embodiment of the present invention, a different arrangement is provided to heat the pre-stretched plastic material. Instead of the provision of means to absorb or adsorb water such as the paper discs of the first embodiment, a microwaveable susceptor is provided. Susceptors of this type comprise aluminium particles incorporated in a polymer matrix. When subjected to microwave radiation, the susceptor heats up (temperatures of more than 150°C can be reached) and therefore heats the adjacent pre-stretched plastic material. Accordingly, the material in contact with the susceptor has to be heat resistant and a preferred material is PET (polyethyleneterephtalat).

The susceptor can be applied to the pre-stretched plastic material by printing (such as silk screen printing) or by spraying or coating.

For example, the susceptor can be applied in place of the hydrophilic coating discussed in a previous embodiment of the present invention. The decorative item need not then be dipped in water because the application of microwave radiation heats the susceptor itself and the adjacent portions of the plastic discs are heated and bed. The shaping of the plastic material is controlled by the size of the susceptor rather than a varying of its thickness or an in-print pattern.

When a susceptor is used, it is also possible to use a two way oriented material instead of the single-direction pre-stretched plastic discs described above. This avoids the need to alternate the directions of pre-stretching of the plastic discs because the arrangement of the susceptor determines the direction of shaping when microwave radiation is applied. This in turn saves costly machine and production time.

Decorative items as described above may be used in a number of different ways. For example as Christmas decorations; fashion jewellery; stationery; merchandising and promotional materials; artificial flowers; floating novelties; food decoration; picture frames; fashion and clothing accessories and toys. In one embodiment of the invention, a stack is attached to a greetings card, which may subsequently be immersed in water by a consumer and subjected to microwave radiation. The plastic discs are then shaped as described above making the greetings card look more attractive.

It is envisaged that in certain embodiments of the invention, the decorative item, itself, may be perfumed.

It is to be understood that the general method of the present Application is not restricted to its use in connection with the above embodiments relating to decorative items. The method may also be used for the manufacture of functional goods. For example, water, may be applied to a pre-stretched plastic blank by hand or by using a brush to create selective portions of heating on the plastic material when subjected to microwave radiation. Alternatively, hydrophobic and hydrophilic coatings may be applied selectively to portions of the plastic blank to create corresponding portions of heating and shaping of the plastic blank after the blank is dipped in water and microwave radiation is applied. Furthermore, a microwaveable susceptor may be pre-printed on a blank to create selective portions of heating of the plastic material when subjected to microwave radiation. In this way blanks having a thickness of up to 1.2mm or even up to 4mm can be bent through an angle of up to 100°. It is envisaged that such arrangements could be used in methods of shaping receptacles such as food, perfume and stationery receptacles and for use in shaping packaging, bathroom items, home appliances, sports gear, crockery, containers, and furniture, particularly garden furniture.

In some embodiments of the invention a liquid, other than water, that is heatable by microwave radiation is used instead of water.

In the present specification "comprise" means "includes or consists of" and "comprising" means "including or consisting of".

The features disclosed in the foregoing description, or the following claims, or the accompanying drawing, expressed in their specific forms or in terms of a means for performing the disclosed function, or a method or process for attaining the disclosed result, as appropriate, may, be utilised for realising the invention in diverse forms thereof.

## Claims

1. A method of forming a blank into a desired shape comprising the steps of: providing a blank comprising a heat shrinkable material the blank being predisposed to deform in a prescribed manner upon heating of the heat shrinkable material above a deformation temperature of the material; locating a substance heatable by microwave radiation adjacent a selected portion of the blank; and applying microwave radiation to the substance so that the substance is heated, thus heating the portion of the blank to a temperature above the deformation temperature to cause the selected portion of the blank to deform in the prescribed manner and thereby form the blank into the desired shape.

2. A method according to Claim 1 wherein the substance comprises a susceptor.

3. A method according to Claim 1 wherein the substance comprises a liquid.

4. A method according to Claim 3 wherein the liquid comprises water.

5. A method according to Claim 3 or 4 wherein the blank further comprises means, located adjacent a portion of the plastic material, for adsorbing or absorbing the liquid.

6. A method according to Claim 5, wherein the liquid is applied by immersing the blank in the liquid so that the liquid is adsorbed or absorbed by the means for adsorbing or absorbing the liquid.

7. A method according to any one of the preceding claims wherein the heat shrinkable material comprises a pre-stretched plastics material.

8. A kit for making a shaped object comprising a deformable blank of a heat shrinkable material, the blank being predisposed to deform in a prescribed manner upon heating of the heat shrinkable material above a deformation temperature of the material; and a substance locatable adjacent a selected portion of the blank, the substance being heatable by microwave radiation such that, in response to microwave radiation, the substance is heated thus heating the heat shrinkable material of the selected portion or portions of the blank to a temperature above the deformation temperature to cause the selected portion of the blank to deform in the prescribed manner and thereby form the blank into the desired shape.

9. A kit according to Claim 8, wherein the substance locatable adjacent the selected portion of the blank comprises a liquid, means for adsorbing or absorbing the liquid being locatable adjacent the selected portion of the blank.

10. A kit according to Claim 9, wherein the means for adsorbing or absorbing a liquid comprises one or more absorbent sheets.

11. A kit according to Claims 9, wherein the means for adsorbing or absorbing the liquid comprises a hydrophilic coating on the surface of at least a portion of the blank.

12. A kit according to Claim 11, further comprising a hydrophobic coating applied to at least a portion of the blank.

13. A kit according to any one of Claims 9 to 12, wherein the liquid comprises water.

14. A kit according to Claim 8, wherein the substance is a susceptor.

15. A kit according to any one of Claims 8 to 14, wherein the shaped object is a decorative item.

16. A kit according to any one of Claims 8 to 14, wherein the shaped object is: a receptacle for food, perfume or stationery; a container; or packaging.

17. A kit according to any one of Claims 8 to 16, wherein the heat shrinkable material comprises a pre-stretched plastics material.

## Patentansprüche

1. Verfahren zum Formen eines Rohlings zu einer gewünschten Form, das die folgenden Schritte umfasst: Bereitstellen eines Rohlings, der aus einem wärmeschrumpfbaren Material besteht, wobei der Rohling dafür prädisponiert ist, sich bei Erwärmung des wärmeschrumpfbaren Materials über eine Verformungstemperatur des Materials hinaus auf eine vorgeschriebene Weise zu verformen; Anordnen einer durch Mikrowellenstrahlung erwärmbaren Substanz angrenzend an einen ausgewählten Bereich des Rohlings; und Bestrahlen der Substanz mit Mikrowellenstrahlung, so dass die Substanz erwärmt wird, wodurch der Bereich des Rohlings auf eine Temperatur über der Verformungstemperatur erwärmt wird, um zu bewirken, dass sich der ausgewählte Bereich des Rohlings auf die vorgeschriebene Weise verformt, und **dadurch** den Rohling zur gewünschten Form zu formen.

2. Verfahren nach Anspruch 1, worin die Substanz einen Suszeptor umfasst.

3. Verfahren nach Anspruch 1, worin die Substanz eine Flüssigkeit umfasst.

4. Verfahren nach Anspruch 3, worin die Flüssigkeit Wasser umfasst.

5. Verfahren nach Anspruch 3 oder 4, worin der Rohling außerdem angrenzend an einen Bereich des Kunststoffmaterials Mittel zur Adsorption oder Absorption der Flüssigkeit umfasst.

6. Verfahren nach Anspruch 5, worin die Flüssigkeit durch Eintauchen des Rohlings in die Flüssigkeit aufgebracht wird, so dass die Flüssigkeit durch die Mittel zur Adsorption oder Absorption adsorbiert oder absorbiert wird.

7. Verfahren nach irgendeinem der vorhergehenden Ansprüche, worin das wärmeschrumpfbare Material ein vorgestrecktes Kunststoffmaterial umfasst.

8. Ausrüstung zur Herstellung eines geformten Gegenstandes, umfassend einen verformbaren Rohling aus einem wärmeschrumpfbaren Material, wobei der Rohling dafür prädisponiert ist, sich bei Erwärmung des wärmeschrumpfbaren Materials über eine Verformungstemperatur des Materials hinaus auf eine vorgeschriebene Weise zu verformen; und eine Substanz, die angrenzend an einen ausgewählten Bereich des Rohlings anordenbar ist, wobei die Substanz durch Mikrowellenstrahlung erwärmbar ist, so dass als Reaktion auf Mikrowellenstrahlung die Substanz erwärmt wird, wodurch das wärmeschrumpfbare Material des ausgewählten Bereiches oder der ausgewählten Bereiche des Rohlings auf eine Temperatur über der Verformungstemperatur erwärmt wird, um zu bewirken, dass sich der ausgewählte Bereich des Rohlings auf die vorgeschriebene Weise verformt und **dadurch** den Rohling zur gewünschten Form zu formen.

9. Ausrüstung nach Anspruch 8, worin die angrenzend an den ausgewählten Bereich des Rohlings anordenbare Substanz eine Flüssigkeit umfasst, wobei Mittel zur Adsorption oder Absorption der Flüssigkeit angrenzend an den ausgewählten Bereich des Rohlings anordenbar sind.

10. Ausrüstung nach Anspruch 9, worin das Mittel zur Adsorption oder Absorption einer Flüssigkeit ein oder mehrere saugfähige Blätter umfasst.

11. Ausrüstung nach Anspruch 9, worin das Mittel zur Adsorption oder Absorption der Flüssigkeit eine hydrophile Beschichtung auf der Oberfläche wenigstens eines Bereichs des Rohlings umfasst.

12. Ausrüstung nach Anspruch 11, welche außerdem eine hydrophobe Beschichtung umfaßt, die auf wenigstens einem Bereich des Rohlings aufgebracht ist.

13. Ausrüstung nach irgendeinem der Ansprüche 9 bis 12, worin die Flüssigkeit Wasser umfasst.

14. Ausrüstung nach Anspruch 8, worin die Substanz ein Suszeptor ist.

15. Ausrüstung nach irgendeinem der Ansprüche 8 bis 14, worin der geformte Gegenstand ein Zierartikel ist.

16. Ausrüstung nach irgendeinem der Ansprüche 8 bis 14, worin der geformte Gegenstand ist: ein Aufnahmebehältnis für Nahrungsmittel, Parfum oder Schreibmaterialien; ein Behälter oder eine Verpackung.

17. Ausrüstung nach irgendeinem der Ansprüche 8 bis 16, worin das wärmeschrumpfbare Material ein vorgestrecktes Kunststoffmaterial umfasst.

## Revendications

1. Procédé de formation d'une découpe dans un profil souhaité, comprenant les étapes consistant à :
- fournir une découpe comprenant un matériau thermo-rétractable, la découpe étant prédisposée pour se déformer selon une manière prédéfinie en chauffant le matériau thermo-rétractable au-dessus d'une température de déformation du matériau ;
- positionner une substance pouvant chauffer par rayonnement micro-onde de manière adjacente à une partie sélectionnée de la découpe ; et
- appliquer un rayonnement micro-onde sur la substance de telle sorte que la substance soit chauffée, chauffant ainsi la partie de la découpe à une température supérieure à la température de déformation pour que la partie sélectionnée de la découpe se déforme selon la manière prédéfinie et forme alors la découpe dans le profil souhaité.

2. Procédé selon la revendication 1,
**caractérisé en ce que**
la substance comprend un matériau sensible.

3. Procédé selon la revendication 1,
**caractérisé en ce que**
la substance comprend un liquide.

4. Procédé selon la revendication 3,
**caractérisé en ce que**
le liquide comprend de l'eau.

5. Procédé selon la revendication 3 ou 4,
**caractérisé en ce que**
la découpe comprend en outre un moyen positionné de manière adjacente à une partie du matériau plastique, pour adsorber ou absorber le liquide.

6. Procédé selon la revendication 5,
**caractérisé en ce que**
le liquide est appliqué par immersion de la découpe dans le liquide de telle sorte que le liquide soit adsorbé ou absorbé par le moyen d'adsorption ou d'absorption du liquide.

7. Procédé selon l'une quelconque des revendications précédentes,
**caractérisé en ce que**
le matériau thermo-rétractable comprend un matériau plastique pré-étiré.

8. Outillage destiné à réaliser un objet profilé comprenant une découpe déformable composée en un matériau thermo-rétractable, la découpe étant prédisposée pour se déformer selon une manière prédéfinie en chauffant le matériau thermo-rétractable au-dessus d'une température de déformation du matériau ; et une substance pouvant être positionnée de manière adjacente à une partie sélectionnée de la découpe, la substance pouvant être chauffée par rayonnement micro-onde de telle sorte que, en réponse au rayonnement micro-onde, la substance soit chauffée pour ainsi chauffer le matériau thermo-rétractable de la partie sélectionnée ou les parties de la découpe à une température supérieure à la température de déformation pour que la partie sélectionnée de la découpe se déforme selon la manière prédéfinie et forme alors la découpe dans le profil souhaité.

9. Outillage selon la revendication 8,
**caractérisé en ce que**
la substance pouvant être positionnée de manière adjacente à la partie sélectionnée de la découpe comprend un liquide, un moyen d'adsorption ou d'absorption du liquide pouvant être positionné de manière adjacente à la partie sélectionnée de la découpe.

10. Outillage selon la revendication 9,
**caractérisé en ce que**
le moyen d'adsorption ou d'absorption d'un liquide comprend une ou plusieurs feuilles absorbantes.

11. Outillage selon la revendication 9,
**caractérisé en ce que**
le moyen d'adsorption ou d'absorption du liquide comprend une couche hydrophile sur la surface d'au moins une partie de la découpe.

12. Outillage selon la revendication 11,
**caractérisé par**
en outre une couche hydrophobe appliquée sur au moins une partie de la découpe.

13. Outillage selon l'une quelconque des revendications 9 à 12,
**caractérisé en ce que**
le liquide comprend de l'eau.

14. Outillage selon la revendication 8,
**caractérisé en ce que**
la substance est un matériau sensible.

15. Outillage selon l'une quelconque des revendications 8 à 14,
**caractérisé en ce que**
l'objet profilé est un élément décoratif.

16. Outillage selon l'une quelconque des revendications 8 à 14,
**caractérisé en ce que**
l'objet profilé est un récipient destiné à recevoir de la nourriture, du parfum ou de la papeterie ; un conteneur ; ou un emballage.

17. Outillage selon l'une quelconque des revendications 8 à 16,
**caractérisé en ce que**
le matériau thermo-rétractable comprend un matériau plastique pré-étiré.
